# EUROPEAN PATENT SPECIFICATION

(11) **EP 4 151 884 B1**
(45) Date of publication and mention of the grant of the patent: **15.11.2023**
(21) Application number: 21425043.3
(22) Date of filing: 20.09.2021
(51) Int. Cl.: F16H 25/22, H02K 7/06, F16D 1/10, F16H 25/24

(54) **LINEAR ELECTROMECHANICAL ACTUATOR AND METHOD FOR ASSEMBLING THE OUTPUT MEMBER OF SUCH ACTUATOR**
LINEARER ELEKTROMECHANISCHER AKTUATOR UND VERFAHREN ZUR MONTAGE DES AUSGANGSELEMENTS EINES SOLCHEN AKTUATORS
ACTIONNEUR ÉLECTROMÉCANIQUE LINÉAIRE ET PROCÉDÉ D'ASSEMBLAGE DE L'ÉLÉMENT DE SORTIE D'UN TEL ACTIONNEUR

(43) Date of publication of application: 22.03.2023
(73) Proprietor: Diakont S.r.l., 50025 Montespertoli (FI) (IT)
(72) Inventor: Fedosovskiy, Mikhail, 197720 Saint Petersburg (RU); Kerdol, Zakhar, 188689 Vsevolozhskii district Yanino (RU)
(74) Representative: Emmi, Mario

(56) References cited:
- DE-A1-102007 013 790
- DE-A1-102016 218 309
- DE-B3-102011 050 814

## Description

### FIELD OF THE INVENTION

The present invention relates to a linear electromechanical actuator with a roller screw drive, and to a method for assembling the output member of an electromechanical actuator.

### DESCRIPTION OF THE RELATED ART

Linear electromechanical actuators (hereinafter referred to simply as EMA) are widely used for automating technological processes in mass manufacturing. One of the key characteristics of an EMA that operates essentially in a continuous mode is reliability and failure-free performance since in mass manufacturing, an EMA failure leads to a significant decrease in the number of manufactured products and to production line downtime. Mass manufacturing includes manufacturing of prefabricated vehicle body parts, e.g., side doors and trunk lids, by resistance spot welding. EMA is used for moving the traveling electrode of the welding gun and for compressing the parts which are then welded together.

DE 10 2016 218309 A1 and US2019/309835 A1 disclose an EMA comprising a roller screw drive (RSD) cylinder with an internal thread, threaded rollers, and a rod which, in addition to functioning as the EMA rod, further functions as the RSD screw due to the fact it has an external thread at one end, the thread engaging with said threaded rollers. To ensure cyclic load resistance of the thread and, therefore, to ensure the operability of the EMA, the RSD screw has an increased hardness. In turn, the EMA rod comprises a hard surface of the cylindrical part which contacts the seal preventing the ingress of water and contaminants into the internal volume of the EMA, the seal mounted in the front flange of the EMA. The increased hardness in the prior art EMA is provided by through hardening of the rod. However, in this case, the manufacturability of the EMA will be lower, since during machining, e.g., threads at the end of the rod for attachment to an actuating element (e.g., a traveling electrode), the cutting tool will wear out faster, which increases replacement frequency for said tool, and the processing speed will be lower, thus increasing processing time for one part.

Further, DE 10 2016 218309 A1 and US2019/309835 A1 disclose an EMA comprising a roller screw drive (RSD) cylinder with an internal thread, threaded rollers, an RSD screw, and a rod connected to the RSD screw. The RSD screw and the rod are connected to each other by a thread. The rod has a threaded opening. The RSD screw comprises a section with an external thread which is screwed into the threaded opening in the rod. The implementation of the RSD screw and the rod as separate parts allows manufacturing the rod from a widely used gage in the form of a wire (or tube) with a circular cross-section, with a metal layer pre-hardened at the surface by, e.g., hardening using high-frequency currents, and with a core of lesser hardness. These features allow improvement of the rod manufacturability, since the mechanical processing of the elements to be attached to the actuating element is carried out predominantly in the core area of lesser hardness. An additional advantage of said wire is that there is no need to process the outer surface of the rod, as the surface of the rod is already ground, covered with a wear-resistant coating and polished. It should be further noted that the EMA can be modified for various rod stroke. In this case, to improve the manufacturability of the EMA, it is preferable to manufacture the rod and the RSD screw as separate parts in order to produce identical RSD screws and relatively easy-to-manufacture rods of different lengths, which is required to provide rod stroke of the EMA, instead of manufacturing multiple complex parts combining the functions of the rod and the RSD screw and having different lengths.

In order to provide joint movement of the rod and the RSD screw, it is necessary to eliminate rotation of the screw with respect to the rod when torque is applied to the RSD, the torque value being determined by the magnitude of the force applied to the rod and the magnitude of the dynamic loads arising during acceleration and deceleration of the EMA and caused by the actuating element (e.g., a traveling electrode) attached to the EMA rod. The torque applied to the RSD is fully applied to the RSD screw as well.

When using the EMA to perform, e.g., welding of parts, a shock load is applied to the EMA rod when the electrodes compress the parts to be welded, and vibration arises due to imperfect alignment of the geometric and physical axes of rotation of the RSD cylinder. Said shock load and vibration can occur in the course of other technological operations. Further, if the action of the torque required to create a force on the EMA rod coincides with the direction of the thread connecting the rod and the RSD screw, the connection between the rod and the RSD screw is subjected to cyclic torque load tending to unscrew the threaded connection. Said shock and vibration effects and the applied torque lead to self-unscrewing of the threaded connection, spontaneous disconnection of the rod and the RSD screw, impossibility of further translational movement of the rod, EMA failure, and production line downtime.

To reduce the likelihood of self-unscrewing of a threaded connection, various methods of fixing threaded connections to prevent them from self-unscrewing are used, e.g., by applying glue to the surface of the threads. Such a method presumes application of glue to the threaded surfaces of the rod and the RSD screw during assembly, said surfaces being inaccessible for inspection after assembling the threaded connection, thus making it impossible to assess if glue has been applied. Thus, there remains a possibility of absence of glue due to human error during manufacturing and a risk of self-unscrewing of the threaded connection leading to spontaneous disconnection of the rod and the RSD screw, EMA failure, and production line downtime. Further, glue loses strength at elevated temperatures and during temperature changes occurring if the production line operates on a shift schedule wherein there is a periodic shutdown of the production line during which the EMA cools down and then heats up to operating temperatures again at the beginning of the following shift. A decrease in glue strength leads to its failure and the loss of the ability to keep the threaded connection from self-unscrewing, which leads to spontaneous disconnection of the rod and the RSD screw, EMA failure, and production line downtime. Strong two-component glues are available that have a higher resistance to external influences and can be supplied pre-mixed or as separate components. If the glue is pre-mixed, it has a reduced working life and requires storage and transportation at low temperatures, e.g., in a refrigerator, which reduces manufacturability of the EMA. Glues supplied as two components must be mixed before being applied to the surfaces to be bonded (threads, parts to be joined). The mass of glue obtained as a result of mixing the components begins to gradually harden which requires frequent replacement of dispensers used to apply the glue when the glue hardens therein, which increases the cost of manufacturing the EMA.

Mechanical methods of fixing the parts to prevent them from self-unscrewing, e.g., toothed washers mounted between the ends of the RSD screw and the rod and are cut into said end surfaces using teeth, significantly worsen the stationing of the RSD screw with respect to the rod, leading to a slant in the RSD screw, which disturbs the uniformity of the contact between the RSD screw thread and the RSD roller threads, reduces working life and leads to premature EMA failure. Other known mechanical fixation methods are difficult to implement, further the known methods reduce manufacturability of the EMA.

In addition, another disadvantage of the prior art EMA is that the RSD screw cannot be centered with high accuracy with respect to the rod. For centering the RSD screw, a smooth opening is made in the rod, and a section is provided on the screw with a cylindrical outer surface, the section arranged between the thread for connecting with the rod and the thread engaged with threaded rollers. When screwing the RSD screw into the rod, each point of said surface travels in a spiral, and not in a straight line, which significantly increases the likelihood of engagement (galling or seizing) between the surfaces of said section and the opening when there is a small radial gap between them, which is required for accurate centering. Consequently, the gap needs to be increased which leads to low centering accuracy and increases slant of the screw with respect to the rod, which reduces the uniformity of load distribution in the RSD screw threads, rollers and the RSD cylinder, ultimately reducing working life of the EMA.

### SUMMARY OF THE INVENTION

Thus, there is a need in developing an EMA wherein the RSD screw and the rod are connected by means of a connection eliminating the possibility of spontaneous disconnection of the rod and the RSD screw under the effects of vibration, torque and axial force.

This and other objects are obtained with the linear electromechanical actuator (EMA), according to claim 1 and with a method for assembling the output member of the linear electromechanical actuator according to claim 10.

The present EMA eliminates the possibility of spontaneous disconnection of the rod and the RSD screw under the effects of vibration, torque and axial force. Furthermore, the present EMA has an increased working life, improved manufacturability and it can generate increased force.

Due to the fact that the RSD screw has a connecting section with a plurality of teeth which are embedded (depressed) into the surface of the opening in the rod and cause plastic deformation of the surface so that a surface with a shape matching the teeth is formed in the opening, a gapless connection is provided eliminating relative rotation of the rod and the RSD screw under the effect of torque. Consequently, the possibility of spontaneous disconnection of said parts under the effect of torque is eliminated.

The retainer which prevents the rod and the RSD screw from relative longitudinal movement and which is not subject to spontaneous disconnection under the effect of torque arising between the RSD screw and the rod allows eliminating the possibility of spontaneous disconnection of the rod and the RSD screw under the effect of axial force.

An important advantage is the reduction in the slant of the RSD screw with respect to the rod, which is achieved by providing the possibility to form a section of the opening in the rod in the form of a cylinder, and the cylindrical section mating therewith on the RSD screw can be formed with a small gap or interference, and by a collar formed on the RSD screw, the surface of which contacts with the surface of the opening in the rod, which improves the uniformity of load on the RSD screw threads, rollers and the RSD cylinder, and thus increases working life of the EMA.

It should be noted that the rod does not need to comprise elements having a complex geometric cross-sectional shape which would require high-precision machining. The lack of mating elements of a non-circular cross-sectional shape further allows to simplify equipment for automated EMA assembly and to reduce assembly time by eliminating the need to orient parts relative to each other during assembly. Thus, the manufacturability of the EMA is increased.

Further, when connecting the rod and the RSD screw, the parts move only translationally with respect to each other, which reduces the risk of engagement (galling or seizing) of the centering surfaces of the rod and the RSD screw, reduces rejection rate during manufacture and, consequently, improves the manufacturability of the EMA.

According to the invention, the axial opening in the rod defines a tapered section, and the screw comprises a plurality of teeth arranged at an angle to the screw axis, which allows to increase the force transmitted by the connection of the screw and the rod and therefore increase the force that the EMA can generate.

According to one embodiment, annular grooves can be formed on the tapered section of the axial opening, into the surface of which the teeth arranged at an angle to the axis of the screw are pressed. This feature reduces the force required for the teeth to plastically deform the surface of said section of the opening, and further increases reproducibility of the process of pressing the teeth into the surface of the tapered section of the opening and repeatability of the force required for plastic deformation, which increases manufacturability of the EMA in mass manufacturing. It should be noted that the annular grooves further allow the teeth to penetrate deeper into the rod body, which allows the teeth to take on the bending load occurring when torque is applied to the connection of the RSD screw and the rod closer to the base of the teeth which has an increased thickness compared to the tops of the teeth. This feature increases resistance of the teeth to torque and thus allows to increase the force that can be applied to the rod.

According to one embodiment, the retainer preventing relative longitudinal movement of the screw and the rod is formed by at least two protrusions, the protrusions being made on the end of the rod proximal to the screw so as to enclose the collar of the screw, which allows to reduce the number of EMA parts.

According to one embodiment, the retainer preventing relative longitudinal movement of the screw and the rod is formed by at least two protrusions on the end of the rod proximal to the screw, the protrusions enclosing the collar of the screw, and a ring enclosing the protrusions. This embodiment allows to achieve an increase in manufacturability of the EMA due to a radial gap between the protrusions and the collar, which reduces the force required to mount the ring, and allows to increase the force that the EMA can generate due to the fact that the ring is not subject to torque and axial force applied to the rod and the RSD screw.

According to one embodiment, the retainer preventing relative longitudinal movement of the screw and the rod is formed by at least two protrusions on the end of the rod proximal to the screw, the protrusions enclosing the collar of the screw, and a ring enclosing the protrusions, the protrusions having a tapered outer surface, wherein the tapering angle of the surfaces is such that the diameter of the circle in which the protrusions are inscribed increases towards the end of the rod proximal to the screw. This embodiment allows the outer surfaces of the protrusions to apply the same pressure to the openings of the ring along its length in order to reduce ring strength requirements, e.g., hardness requirements.

According to one embodiment, the ring enclosing the protrusions has a tapered opening, and the protrusions have a tapered outer surface, wherein the tapering angle of the surfaces is such that the diameter of the circle in which the protrusions are inscribed increases towards the end of the rod proximal to the screw. This embodiment allows to improve vibration resistance of the EMA.

According to one embodiment, the retainer preventing relative longitudinal movement of the screw and the rod is formed by an axial threaded opening on the end of the rod proximal to the screw and a nut with an external thread screwed into the axial opening. This embodiment allows for the use of a relatively simple threaded connection and simultaneously eliminates the possibility of spontaneous disconnection of parts due to the fact that the threaded connection is not subjected to torque. It should be noted that the self-unscrewing of the nut can be prevented by means of glue, the presence of which on the thread is easy to determine as the threaded connection is visible after assembly. As the nut is not subjected to torque, the glue has a large strength margin. It should be noted that the nut thread has a larger diameter than the thread that would be formed on the RSD screw for connection with the rod, which allows to increase the glue application area, and thus increase connection strength. Further, to prevent the self-unscrewing, a toothed washer can be used which in this case does not cause a slant in the RSD screw with respect to the rod since the washer is not arranged between the ends of the RSD screw and the rod.

According to one embodiment, the retainer is formed by sections of the annular protrusion bent towards the axis of the rod at the end of the rod proximal to the screw. This embodiment allows to reduce the number of parts and thus increase the manufacturability of the EMA.

According to one embodiment, the RSD screw has an axial opening allowing to reduce the weight of the EMA.

Further provided is a method for assembling the output member of a linear electromechanical actuator, as described above, the method comprising positioning the screw and the rod coaxially with respect to each other so that the axial threaded opening of the rod faces the connecting section of the screw, insertion the connecting section of the screw into the rod opening by applying a controlled axial force to embed the teeth into the surface of the axial opening by plastic deformation of the surface, and fixation the rod and the screw from relative longitudinal movement with the retainer.

According to one embodiment, when the retainer is formed by a nut with an external thread, the fixation is performed by positioning the nut with the external thread coaxially with the axial threaded opening in the rod, screwing the nut into the axial threaded opening of the rod, and tightening the nut by applying controlled torque.

According to one particular embodiment of the method, glue is applied to the nut thread prior to the screwing.

According to one particular embodiment of the method, a toothed washer is mounted between the nut and the rod prior to the screwing the nut.

According to one embodiment, when the retainer is formed by sections of the annular protrusion bent towards the axis of the rod, the fixation is performed by bending the sections of the annular protrusion towards the axis of the rod by applying a controlled force until the sections enclose the screw.

According to one particular embodiment of the method, a press-stem is used to bend the sections of the annular protrusion towards the axis of the rod.

According to one embodiment, when the retainer is formed by at least two protrusions on the end of the rod proximal to the screw, the fixation is performed by insertion the screw by applying a controlled force until the protrusions enclose the collar of the screw..

According to one embodiment, when the retainer is formed by at least two protrusions on the end of the rod proximal to the screw and a ring, the fixation is performed by insertion the screw by applying a controlled force until the protrusions enclose the collar of the screw, positioning the ring coaxially with respect to the rod and mounting the ring on the protrusions by applying a controlled axial force.

According to one particular embodiment of the method, the ring is heated when being mounted on the protrusions.

According to another particular embodiment of the method, the ring is positioned on the protrusions without releasing the controlled axial force applied to the screw.

According to another particular embodiment of the method, the controlled axial force is applied with the use an industrial press.

The above methods for assembling allow reducing the time required for connecting the RSD screw and the rod as there is no need to adjust angular positions of the RSD screw and the rod with respect to each other, to reduce rejection rate due to subsequent spontaneous disconnection of the RSD screw and the rod by providing improved repeatability of the process by controlling force and the position of the RSD screw when it is being pressed into the rod.

### BRIEF DESCRIPTION OF THE DRAWINGS

The invention is explained in more detail in the context of non-limiting embodiments with reference to the accompanying drawings, wherein:

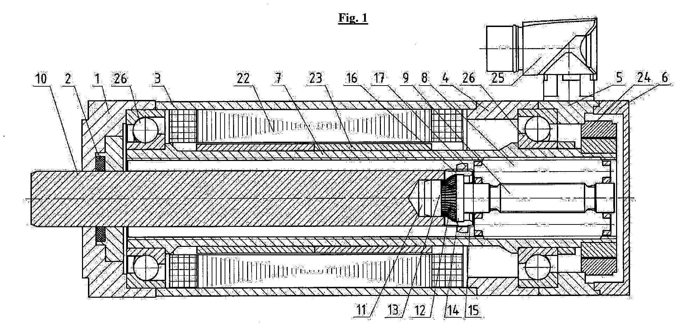

Fig. 1 shows a longitudinal section of the EMA, wherein the teeth are arranged at an angle to the axis of the screw, and the retainer preventing relative longitudinal movement of the screw and the rod is shown in the form of protrusions on the end of the rod and a ring.

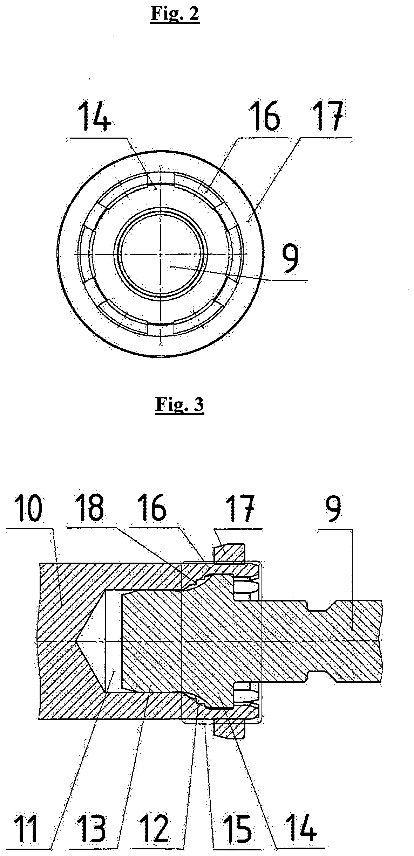

Fig. 2 shows the connection (rear view) of the screw and the rod, wherein the teeth are arranged at an angle to the axis of the screw, and the retainer preventing relative longitudinal movement of the screw and the rod is shown in the form of protrusions on the end of the rod and a ring.
Fig. 3 shows a longitudinal section of the connection of the screw and the rod, wherein the teeth are arranged at an angle to the axis of the screw, annular grooves are arranged on a tapered section of the opening 11, and the retainer preventing relative longitudinal movement of the screw and the rod is shown in the form of protrusions on the end of the rod and a ring.

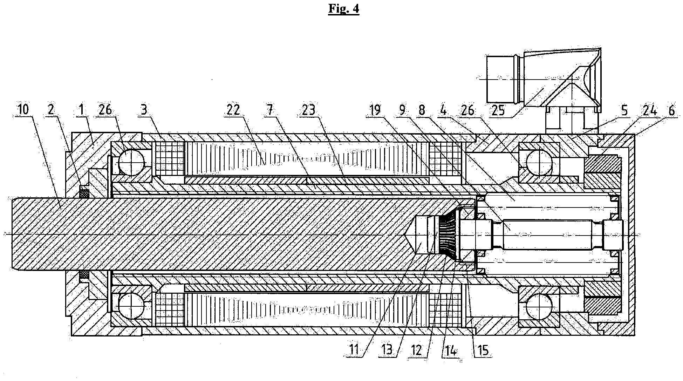

Fig. 4 shows a longitudinal section of the EMA, wherein the teeth are arranged at an angle to the axis of the screw, and the retainer preventing relative longitudinal movement of the screw and the rod is shown in the form of a threaded opening formed in the rod near the end of the rod proximal to the screw, and a nut with an external thread screwed into the threaded opening.

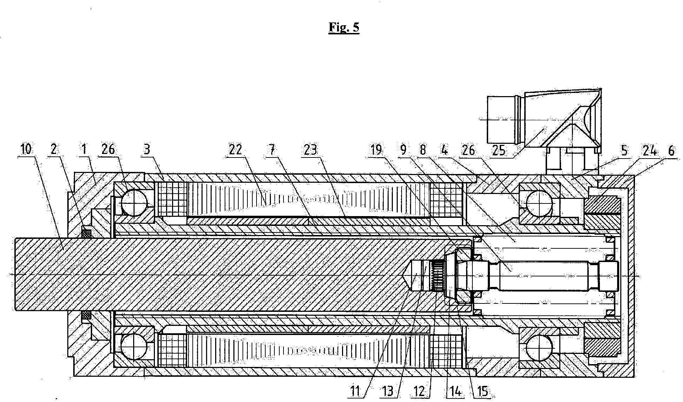

Fig. 5 shows a longitudinal section of the EMA, wherein the teeth are arranged parallel to the axis of the screw, and the retainer preventing relative longitudinal movement of the screw and the rod is a threaded opening formed in the rod near the end of the rod proximal to the screw, and a nut with an external thread screwed into the threaded opening.

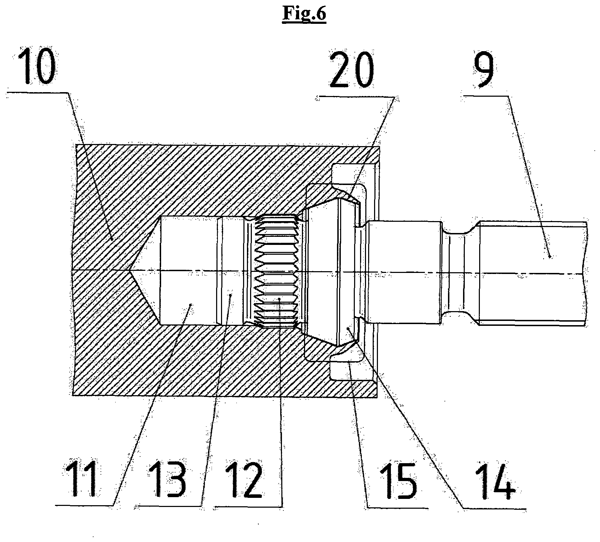

Fig. 6 shows a longitudinal section of the connection of the screw and the rod, wherein the teeth are arranged parallel to the axis of the screw, and the retainer preventing relative longitudinal movement of the screw and the rod is shown in the form of sections of an annular protrusion bent towards the axis of the screw. This example is not part of the invention.

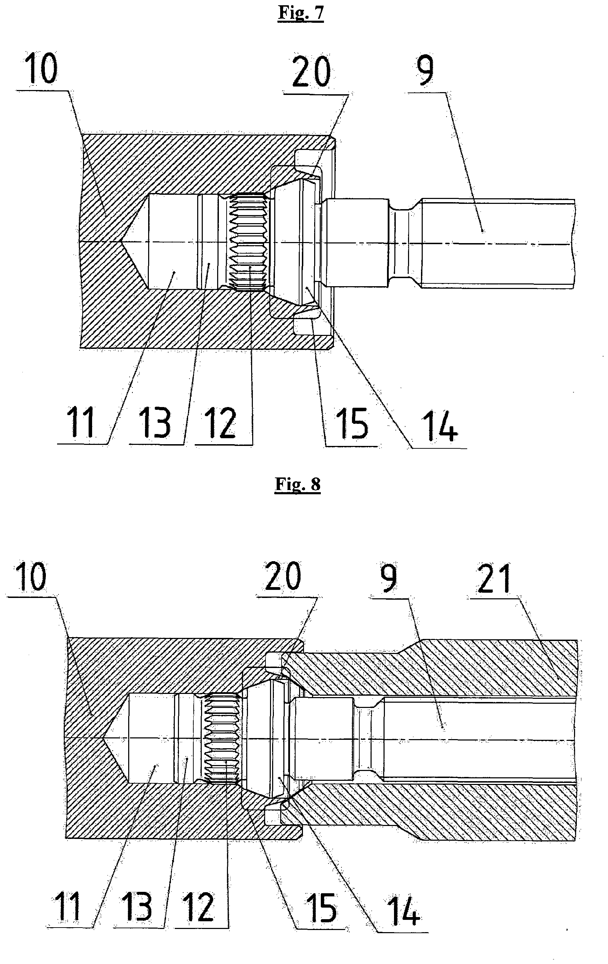

Fig. 7 shows a longitudinal section of the connection of the screw and the rod prior to bending the sections of the annular protrusion.
Fig. 8 shows a longitudinal section of the connection of the screw and the rod and a press-stern for bending sections of the annular protrusion prior Lo bending the sections of the annular protrusion.

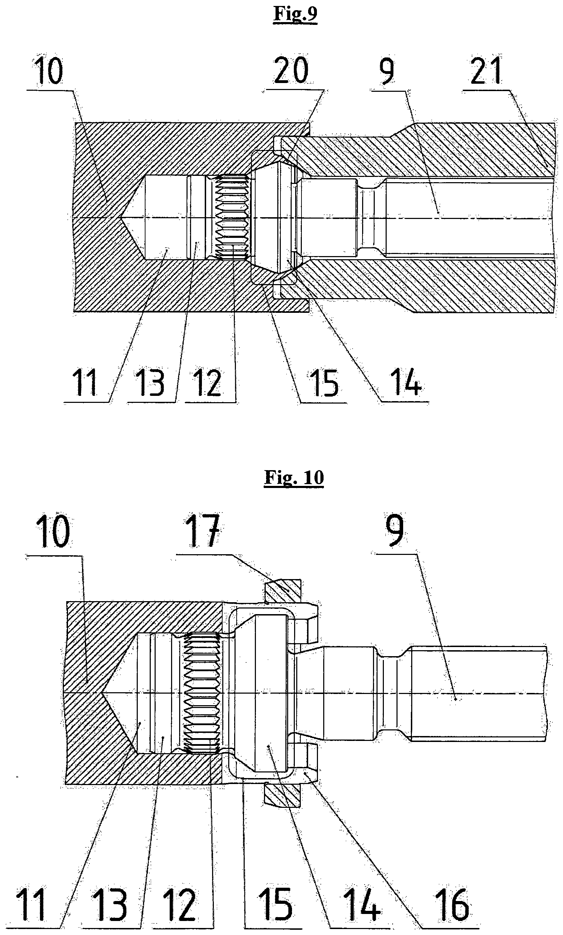

Fig. 9 shows a longitudinal section of the connection of the screw and the rod and a press-stem for bending sections of the annular protrusion after bending the sections of the annular protrusion.
Fig. 10 shows a longitudinal section of the connection of the screw and the rod, wherein the teeth are arranged parallel to the axis of the screw, and the retainer preventing relative longitudinal movement of the screw and the rod is shown in the form of radial protrusions on the end of the rod and a ring. This example is not part of the invention.

### DETAILED DESCRIPTION OF THE INVENTION

The EMA (Fig. 1) comprises a housing consisting of a flange 1 with a seal 2, body elements 3, 4, 5 and a cover 6, wherein an electric motor and a roller screw drive (RSD) are arranged and configured to interact with each other.

The RSD comprises a cylinder 7 with an internal thread rotatably mounted within the housing, threaded rollers 8, an RSD screw 9 (hereinafter referred to as screw 9) with a threaded section, and a rod 10, the components mounted in the cylinder 7 and configured for translational movement. The screw 9 is arranged coaxially with the rod 10.

In the rod 10, an axial opening 11 is formed on the end proximal to the screw 9. The opening 11 in the rod has a cylindrical section and a tapered section located closer to the end proximal to the screw 9, wherein the screw 9 has teeth 12 arranged at an angle to the axis of the screw 9. When moving the screw 9 translationally towards the rod 10 during assembly, the teeth 12 plastically deform the surface of the tapered section of the opening 11 of the rod 10 and penetrate into it so that a surface shape matching the shape of the teeth 12 (depressions with a shape complementary to the shape of teeth 12) is formed on the tapered section of the opening 11. A gapless connection is formed between the screw 9 and the rod 10, ensuring that the screw 9 cannot be rotated with respect to the rod 10. This embodiment allows to implement the connection of the screw 9 and the rod 10 with a shorter length due to the fact that the teeth 12 are arranged on the tapered section of the screw 9, the section having a larger diameter at the base, which increases the torque that they can transmit, and therefore it is possible to reduce the length occupied by the teeth 12 along the length of the screw 9, and therefore reduce the length of the screw 9. Naturally, an increase in torque that can be applied to the rod 10 and the screw 9 also allows to increase the maximum force that can be generated by the EMA.

The teeth 12 in this embodiment have a triangular shape but can also have a different shape which can be formed using different methods of machining, e.g., knurling, milling or planing. The force required for plastic deformation of the surface of the opening 11 by the teeth 12 can be achieved, e.g., by using a press, while the hardness of the teeth 12 must be higher than the hardness of the surface of the opening 11. The hardness of the teeth 12 and the rod 11 opening is selected in order to ensure sufficient strength of the teeth 12 allowing them to penetrate into the surface of the axial opening, and so that the teeth 12 and depressions of a complementary shape formed on the axial opening when the teeth 12 are embedded therein would withstand the force and torque applied to the screw 9 and the rod 10. The shape and size of the teeth 12 and the dimensions of the tapered section of the opening 11 into which the teeth 12 are pressed determine the depth to which the teeth 12 penetrate into the surface of said section and, accordingly, the force required to connect the screw 9 and the rod 10. This force should at least be equal to the force applied to the rod 10 during EMA operation in order to avoid further pressing of the teeth 12 into the surface of the tapered section of the opening 11, which would lead to formation of an axial gap between the rod 10 and the screw 9. The axial gap between the screw 9 and the rod 10 leads to collisions between the rod 10 and the screw 9 and to a constantly increasing deformation of the mating surfaces of the rod 10 and the screw 9, which would ultimately lead to an increase in the clearance to such an extent that the teeth 12 would no longer prevent the rod 10 and the screw 9 from relative rotation.

On the screw 9, a section 13 is arranged having a cylindrical shape which is mated with the opening 11 of the rod 10, wherein the diameter of this cylinder is slightly smaller than the diameter of the opening 11 of the rod 10, which allows to provide a small gap between the section 13 and the opening 11 and therefore a small slant of the screw 9 with respect to the rod 10. Further, the section 13 can be formed with a slightly larger diameter compared to the diameter of the opening 11 in order to provide an interference fit to eliminate the gap between the section 13 and the opening 11 in order to reduce the slant of the screw 9 with respect to the rod 10. The reduction in the slant of the screw 9 with respect to the rod 10 improves the uniformity of load distribution in the contact points of the roller 8 threads, the screw 9 and the cylinder 7, thus increasing working life of the EMA. The lack of relative rotation of the screw 9 and the rod 10 during assembly significantly reduces the likelihood of engagement (galling or seizing) of the surface of the section 13 and the opening 11, thus allowing to reduce rejection rate in manufacturing and thus increase manufacturability of the EMA.

A collar 14 is formed on the screw 9, which in the present embodiment is combined with the section with teeth 12, and has a flat end proximal to the threaded section of the screw 9. Between the screw 9 and the rod 10, a retainer 15 is arranged which fixes the screw 9 and the rod 10 in place, preventing them from longitudinal movement with respect to each other. In this embodiment, the retainer 15 is formed by protrusions 16 and a ring 17. On the end of the rod 10 proximal to the screw 9, at least six protrusions 16 (Fig. 2) are formed having a length greater than the length of the collar 14 on the screw 9. The number of protrusions 16 is determined by the maximum force that can be generated by the EMA. When the screw 9 is pressed into the rod 10, the protrusions 16 move apart in the radial direction due to the contact between the surfaces of the tops of teeth 12 and the bevels at the ends of the protrusions 16. After the screw 9 is pressed in, the protrusions 16 return to their original shape, pressing the screw 9 through the end of the collar 14 to the rod 10 in the longitudinal direction. A ring 17 is mounted on the protrusions 16 with an interference fit, preventing the protrusions 16 from moving apart when an axial force is applied to the rod 10 and the screw 9, and thus fixing the screw 9 and the rod 10 in place and preventing them from relative longitudinal movement. The protrusions 16 can have a tapered outer surface, wherein the tapering angle of the surfaces is such that the diameter of the circle in which the protrusions 16 are inscribed increases towards the end of the rod 10 proximal to the screw 9. A radial gap is formed between the protrusions 16 and the outer surface of the collar 14. During mounting of the ring 17, the protrusions 16 are elastically deformed and move in the radial direction towards the axis of the screw 9 within said gap. After the ring 17 is mounted, the outer surface of the protrusions 16 takes on a cylindrical shape in the area of contact with the opening of the ring 17, and the outer surfaces of the protrusions 16 apply the same pressure on the surface of the opening of the ring 17 along its length. The opening in the ring 17 can also be tapered with a tapering angle lesser than the tapering angle of the outer surface of the protrusions 16. In this case, after mounting the ring 17, the outer surface of the protrusions 16 follows the tapered shape of the opening in the ring 17. Thus, due to the elastic deformation of the protrusions 16, the force required to mount the ring 17 is decreased, the manufacturability of the EMA increases, the force required to remove the ring 17 is increased significantly, and, therefore, the force that can be applied to screw 9 and rod 10 without spontaneous disconnection is increased, which leads to an increase in the maximum force that can be generated by the EMA. These shape features of the opening of the ring 17 and the protrusions 16 increase the resistance of the connection of the rod 10 and the screw 9 to vibration. Due to the fact that the ring 17 is not subject to the torque and axial force applied to the screw 9 and the rod 10, the maximum force that can be generated by the EMA increases. Naturally, at low forces on the EMA rod, the ring 17 can be omitted from the structure if the tensile force applied to the screw 9 and the rod 10 is insufficient to pull apart the protrusions 16.

It should be noted that arranging the teeth 12 at an angle to the axis of the screw 9 allows to reduce the length of the screw 9 due to the fact that a separate tapered surface of the collar 14 is not required for pulling apart the protrusions 16 in the radial direction. Thus, the manufacturability of the EMA is increased along with an increase in the maximum force that can be generated by the EMA due to the implementation of elastically deformable protrusions 16 and a ring 17 on the rod 10, which prevents protrusions 16 from moving apart when an axial force is applied to the screw 9 and the rod 10.

An annular groove (not shown in the drawings) is arranged between the section 13 and the teeth 12, with chips or other metal particles formed when the teeth 12 plastically deform the surface of the section of the opening 11 entering the groove.

Fig. 2 is a side view of the screw 9 showing the protrusions 16 and the ring 17 forming the retainer 15.

In the embodiment shown in Fig. 3, at least one annular groove 18 is arranged on the surface of the tapered section of the opening 11, which reduces the area of contact between the teeth 12 and the tapered section of the opening 11 in order to increase the pressure between the surface of said section and the teeth 12. Said groove 18 reduces the force required for the teeth 12 to plastically deform the surface of said part of the opening 11, and further increases reproducibility of the process of pressing the teeth 12 into the surface of the tapered section of the opening 11 and repeatability of the force required for pressing, which increases manufacturability of the EMA in mass manufacturing. It should be noted that the annular groove 18 further allows the teeth 12 to penetrate deeper into the rod 10 body, which allows the teeth 12 to take on the bending load occurring when torque is applied to the connection of the screw 9 and the rod 10 closer to the base of the teeth 12 which has an increased thickness compared to the tops of the teeth. This feature increases resistance of the teeth 12 to torque and thus allows to increase the force that can be applied to the rod 10. The number of grooves 18 is selected depending on the contact area of the surface of the tapered section of the opening 11 and on the force applied to the rod. Naturally, instead of the annular groove 18, an annular protrusion can be formed in the tapered section of the opening 11, which also allows to reduce the area of contact between the tapered section of the opening 11 and the teeth 12.

Fig. 4 shows an embodiment wherein the retainer 15 is formed by a nut 19 with an external thread screwed into an axial threaded opening formed in the rod 10 near the end of the rod 10 proximal to the screw 9, the nut pressing the screw 9 through a cylindrical collar of the screw 9 to the rod 10 and preventing relative longitudinal movement of the screw and the rod. It should be noted that, despite the presence of threads, the nut 19 is not subject to torque corresponding to the force generated by the EMA due to the fact that the torque is transmitted through the connection formed by the teeth 12 and the surface of the opening 11. The self-unscrewing of the nut 19 and, therefore, spontaneous disconnection of the screw 9 and the rod 10 can be prevented by applying glue to the thread of the nut 19 or the threaded opening in the rod 10. As the nut 19 is not subjected to torque, the glue has a large strength margin. Further, to prevent the self-unscrewing, a toothed washer (not shown in the drawings) mounted between the ends of the nut 19 and the threaded opening of the rod 10 can be used. The toothed washer in this case does not cause a slant in the RSD screw with respect to the rod, since the washer is not arranged between the ends of the screw 9 and the rod 10.

Fig. 5 shows an embodiment wherein the teeth 12 are evenly distributed around the circumference on the outer surface of the screw 9 and are arranged parallel to the axis of the screw 9. The opening 11 has a cylindrical shape. The teeth have such dimensions that during translational movement of the screw 9 towards the rod 10 for assembly, the teeth 12 plastically deform the surface of the opening 11 of the rod 10 so that a surface shape matching the shape of the teeth 12 (depressions with a shape complementary to the shape of teeth 12) is formed on the section of the opening 11. The force required for plastic deformation of the surface of the opening 11 by the teeth 12 can be achieved, e.g., by using a press. Due to the fact that the opening 11 on the rod 10 does not have a shape complementary to the teeth 12, and the teeth 12 plastically deform the surface, a gapless connection is formed without the possibility of relative rotation of the rod 10 and the screw 9, the connection not being prone to spontaneous disconnection under the effect of torque applied to the screw 9 and the rod 10, and the manufacturability of the EMA is further increased. On the screw 9, a collar 14 is formed, the diameter of which is larger than the section with teeth 12 and which has a flat end proximal to the threaded section of the screw 9. The outer surface of the collar 14 can be formed by a cylindrical surface or a tapered surface contacting the surface of the section of the axial opening 11 having a corresponding complementary shape and serving as an additional element for basing the screw 9 with respect to the rod 10, reducing slant of the screw 9 and the rod 10, which provides an increase in working life of the EMA. Further, between the screw 9 and the rod 10, a retainer 15 is arranged which fixes the screw 9 and the rod 10 in place, preventing them from longitudinal movement with respect to each other. In this embodiment, the retainer 15 is formed by a nut 19 with an external thread screwed into an axial threaded opening formed in the rod 10 near the end of the rod 10 proximal to the screw 9, the nut pressing the screw 9 through a cylindrical collar of the screw 9 to the rod 10 and preventing relative longitudinal movement of the screw and the rod. As in the embodiment shown in Fig. 4, despite the presence of threads, the nut 19 is not prone to self-unscrewing. It should be noted that when the teeth 12 are arranged parallel to the axis of the screw 9, not only do the teeth 12 plastically deform the surface of the opening 11, but the tops of the teeth 12 also press on the surface of the opening 11, which forms a frictional force between the teeth 12 and the opening 11. To keep said frictional force within the predetermined tolerance, the tops of the teeth 12 may be made blunt. Said frictional force allows to increase the force required to remove the screw 9 from the rod 10, thus increasing the maximum force that can be generated by the EMA. Thus, it is possible to reduce the length of the nut 19 and the length of the screw 9 and the rod 10, respectively. Between the section 13 and the teeth 12, as well as between the teeth 12 and the collar 14, annular grooves are formed (not shown in the drawings), with chips or other metal particles formed when the teeth 12 are pressed into the surface of the section of the opening 11 entering the grooves.

A potential embodiment is shown in Fig. 6, wherein the retainer 15 fixing the screw 9 and the rod 10 to prevent them from relative longitudinal movement is formed by sections of an annular protrusion 20 bent towards the axis of the screw 9. Said sections are pressed against the surface of the collar 14 of the screw 9 which is formed by a tapered outer surface, as shown in Fig. 6. An alternative embodiment is also contemplated, wherein the tapered surface is replaced with a flat end (not shown in the drawings). The inclination angle of the surface of the collar 14 is selected based on the axial force transmitted through the connection of the rod 10 and the screw 9.

Figs. 7, 8, 9 show the process of bending the sections of the annular protrusion 20. The bending of said sections of the annular protrusion 20 of the rod 10 in this embodiment is performed using a press-stem 21 comprising protrusions with a tapered surface at the end proximal to the rod 10, the surface having a tapered angle at which the bent sections of the annular protrusion 20 tightly enclose the screw 9. The number of protrusions on the press-stem 21 is selected depending on the thickness of the annular section 16 which affects the force required to bend the sections towards the axis of the screw 9, as well as on the force transmitted through the connection of the rod 10 and the screw 9, i.e., the force that can be generated by the EMA. For instance, the press-stem 21 can comprise 6 protrusions forming 6 bent sections of the annular protrusion 20. In another embodiment, when the annular protrusion 20 is sufficiently thick, the press-stem can comprise 3 protrusions to reduce the force that must be applied thereto in order to bend the sections of the annular protrusion 20. In this case, the bending of the 6 sections occurs over two operations of pressing the press-stem 21 against the annular protrusion 20, and between said operations, the press-stem 21 is rotated about its axis at an angle such that each protrusion at the end of the press-stem 21 is positioned between two bent sections of the annular protrusion 20. Generally, in this embodiment, after pressing the screw 9 into the rod 10, the press-stem 21 is pressed against the annular protrusion 20 and bends the sections of said protrusion 20 towards the axis of the screw 9, said sections fixing the screw 9 and the rod 10 and preventing them from relative longitudinal movement. It should be noted that in the embodiment wherein sections of the annular protrusion 20 are pressed against the end of the collar 14, sequential bending of said sections is carried out using several press-stems 21 with different tapered surface angles.

Fig. 10 shows an embodiment of the connection of the screw 9 and the rod 10, wherein the teeth 12 are arranged parallel to the axis of the screw 9, and the retainer 15 is formed by the protrusions 16 and the ring 17. In this embodiment, the collar 14 on the screw 9 has a tapered surface closer to the teeth 12, and the protrusions 16 have bevels at their ends contacting said tapered surface.

In embodiments wherein the retainer 15 is formed by protrusions 16 on the end of the rod 10 enclosing the screw 9, and the ring 17, in order to avoid collision of the inner part of the flange 1 with the ring 17, if the rod 10 in an emergency situation reaches its extreme extended position, an annular groove (not shown in the drawings) into which the retaining ring is mounted (not shown in the drawings) can be arranged on the rod 10 closer to the ring 17 from the side of the flange 1. In this case, when the rod 10 reaches the extreme extended position, the flange 1 will collide with said retaining ring, and the ring 17 will not be damaged or displaced, thus preventing disconnection of the rod 10 and the screw 9.

It should be noted that the retainer 15 subjected to axial force is arranged at a larger diameter than the section 13 and the section with teeth 12 in all disclosed embodiments, which allows to form a hole in the screw 9 in order to reduce EMA weight, with the condition of ensuring sufficient section strength in the area under the threaded section contacting the rollers 8 without reducing the maximum force that can be generated by the EMA. The retainer 15 can further be formed, e.g., by radial openings (not shown in the drawings) in the rod 10 and radial coaxial openings (not shown in the drawings) in the collar 14. Pins (not shown in the drawings) are inserted into the openings and prevent the screw 9 and the rod 10 from relative longitudinal movement. In another embodiment, said openings are replaced with threaded openings (not shown in the drawings), and screws (not shown in the drawings) are screwed therein instead of pins.

According to the another embodiment (not shown in the drawings), if the axial force acting on the rod 10 and the screw 9 is relatively low, the retainer 15 may be formed by a mounting screw passing through a hole in the screw 9 and a threaded hole arranged in the rod 10 to receive the threaded end of the screw. The retainer 15 may further comprise a toothed washer to prevent the screw from self-unscrewing under vibration, the washer may be placed at the end of the screw 9 distal from the rod 10. The mounting screw of the retainer 15 compresses the screw 9 so that the stresses induced in the screw 9 when a force is applied to the rod 10 and, hence, to the screw 9, become lower, this increases the EMA lifetime.

According to another embodiment (not shown in the drawings), the retainer 15 may comprise a flange arranged on the screw 9 and a flange arranged on the rod 10, so that the flanges face each other, wherein one of the flanges has holes and the other flange has corresponding threaded holes. The retainer 15 further comprises a number of mounting screws passing through the holes in the one flange and screwed in the threaded holes of the other flange. These mounting screws may be protected from self-unscrewing with the use of toothed washers, as described above.

Threaded rollers 8 are mounted in said cylinder 7 interacting with the internal thread of the cylinder 7 and the threaded section of the screw 9, and configured for transferring force from the cylinder 7 to the rod 10. The electric motor consists of an electric motor stator 22 and an electric motor rotor. The stator 22 is affixed on the inner surface of the housing 3. The electric motor rotor is formed by mounting permanent magnets 23 of the electric motor rotor onto the outer surface of the cylinder 7 of the RSD. Thus, the electric motor rotor is formed by the following components of the EMA: magnets 23 mounted on the outer surface of the cylinder 7. Further, the EMA comprises a position sensor 24, the shaft of which is connected to the cylinder 7 and configured for joint rotation therewith. The position sensor 24 is used to determine the rotation angle of the cylinder 7 and transmit the angle value over the cable (not shown in the drawings) connected to the connector 25 to a frequency converter (not shown in the drawings) in analog or digital form in order to determine the position and rotational speed of the rotor 7 and, therefore, the speed and position of the rod 10 and the formation of the stator 22 supply voltage. The rotor is mounted on two bearing supports consisting of two angular contact ball bearings 26 transferring axial load from the cylinder 7 with an internal thread to parts 1 and 5 of the housing. It should be noted that the cylinder 7 forms part of the roller screw drive and also part of the electric motor rotor.

In various embodiments of the EMA, the cylinder 7 can be mounted on at least one bearing support which can be formed by at least one bearing sufficient to ensure fixation and transmission of radial and axial load.

The cylinder 7 has an internal thread. A thread section with a length approximately equal to the length of the threaded rollers 8 is arranged on the outer surface of the screw 9. The threaded rollers 8 are fixed on the screw 9 so that they cannot move along the axis of the screw 9, but can, in a planetary motion, roll along the thread of the screw 9 and the cylinder 7 with an internal thread. When the cylinder 7 rotates, the threaded rollers 8 move along with the screw 9 and the rod 10 in an axial direction with respect to the cylinder 7. Thus, the above design of the linear electromechanical actuator is an inverted roller screw drive design.

Rotation of the rod 10 may be prevented during operation by an anti-rotation assembly (not shown in the drawings) comprising an anti-rotation assembly shaft, the shaft being arranged outside the EMA in parallel to the rod 10. The anti-rotation assembly further comprises a connecting bridge, the bridge being arranged outside the EMA and being fixed to the rod 10 and the anti-rotation assembly, thus preventing relative movement of the rod 10 and the bridge and connecting the rod 10 with the anti-rotation assembly. The bridge prevents relative movement of the rod 10 and the anti-rotation assembly shaft. The anti-rotation assembly further comprises a hub with a connecting flange, wherein the hub is attached to a side surface of the flange 1 for example by fastening screws passing through the holes in the connecting flange and screwed into respective threaded holes on the side surface of the flange 1. The hub comprises a through hole, wherein the axis of the through hole is parallel to the rod 10 axis and, therefore, to the axis of the anti-rotation assembly. The anti-rotation assembly shaft is configured to passing through the hub hole. Therefore, axial rotation of the rod 10 is prevented, and only translational movement of the rod 10 is enabled.

The hole in the screw 9 not only allows for reduction in EMA weight, but also makes possible to arrange the anti-rotation assembly inside the EMA, thus keeping the size and weight of the EMA from increasing in comparison with an EMA having external anti-rotation assembly. Further, the anti-rotation assembly arranged within EMA has prolonged lifetime since it is protected from the impact of the environment (e.g. dirt and humidity) by EMA housing. Inner anti-rotation assembly comprises the rod 10 having an axial hole (not shown in the drawings). An extended splined shaft (not shown in the drawings) is fixed to the cover 6 and arranged coaxially to the rod 10 inside the axial hole thereof, wherein the diameter of the axial hole exceeds the diameter of the splined shaft, thus making possible free translational motion of the rod 10. The splined shaft length is selected according to the rod 10 stroke. Closer to the screw 9 the axial hole of the rod 10 has a section with splined inner surface (not shown in the drawings) which is configured to mate with the outer surface of the splined shaft. Thus, the side surfaces of protrusions and recesses of the splined shaft and the section with splined inner surface contacting in the axial hole of the rod 10 prevent the rod from rotation but allows translational movement thereof. It should be noted that the section with splined inner surface may also be located on the inside of the screw 9, or on the inside of the hub fixed to the rod 10 or the screw 9 and located within the rod 10. To reduce frictional losses and lower the heating of parts and lubricant on friction surfaces of the splined shaft and the hub, thus extending lifetime of the lubricant, the hub may be made of an anti-frictional material.

Despite the fact that embodiments of the connection of the screw 9 and the rod 10 have been described using the example of an EMA wherein permanent magnets 23 are mounted on the outer surface of the cylinder 7, the disclosed design of the screw 9 and the rod 10 can be implemented achieving the stated technical result in an EMA wherein the electric motor and the RSD are arranged in series or parallel to each other. For instance, the electric motor rotor can be formed by mounting permanent magnets on the outer surface of a hollow or solid shaft placed in series with the cylinder 7 and connected thereto without the possibility of relative movement using, e.g., a flange. The cylinder 7 and the rotor can rotate jointly. The electric motor stator in such an embodiment is arranged in the electric motor body which is placed in series with the housing, with the cylinder 7 arranged therein. The electric motor body and the housing in which the cylinder 7 is arranged are fixed to prevent relative movement by means of, e.g., fastening screws arranged at the corners of the body and the housing, passed through the openings in the electric motor body and screwed into threaded openings in the housing in which the cylinder 7 is arranged. To provide rotation, the rotor and cylinder 7 have bearing supports which are arranged in said body and the housing. An embodiment is contemplated wherein the rotor shaft on bearing supports and the electric motor stator are arranged in a housing, the axis of which is parallel to the axis of the housing in which the cylinder 7 is rotatably arranged on bearing supports. The EMA comprises a housing with the electric motor body and the housing in which the cylinder 7 is arranged connected to one end thereof. Within the housing, pulleys are arranged on the end of the rotor shaft and on the end of the cylinder 7. Each pulley has an axial opening through which a fastening screw is passed, screwed into a threaded opening in the rotor shaft and the cylinder 7, respectively, in order to prevent relative movement of the pulleys with the rotor shaft and the cylinder 7. A belt is tensioned on the pulleys. When the electric motor rotor shaft rotates, the pulley drives the belt, which in turn drives the pulley on the cylinder 7.

The disclosed linear electromechanical actuator is operated as follows. When AC voltage is supplied to the electric motor stator 22, a rotating electric field of the stator 22 is generated, which rotates the rotor with permanent magnets 23. The position sensor 24 determines the rotation angle of the electric motor rotor. The signal from the position sensor 24 is fed to the frequency converter to determine the position and speed of the EMA rod 10 and to form the supply voltage of the stator 22. The rotation of the rotor leads to the rotation of threaded rollers 8 and their translational movement along with the screw 9 and the rod 10 connected thereto. The magnitude of the force that the EMA can generate during the translational movement of the screw 9 generally depends on the distance that the screw 9 travels per one revolution of the cylinder 7 (transfer function of the RSD), the limiting torque of the electric motor, materials and dimensions of the RSD, materials and dimensions of the elements used to affix the EMA on the equipment, the actuating element of which moves the EMA.

Assembled together, the rod 10 and the screw 9 form the output member of the linear electromechanical actuator. During assembly, the rod 10 is fixed on the press table (not shown in the drawings) using a tooling (not shown in the drawings). The screw 9 and the rod 10 are positioned coaxially with respect to each other, while there is no orientation of the screw 9 and the rod 10 with respect to each other by the rotation angle about the axis. The rod 10 and the screw 9 face each other with the axial opening 11 and the section with teeth 12, respectively. For convenience, the screw 9 is fixed to the press rod using, e.g., a clamp. It should be noted that instead of an industrial press, specialized equipment can be developed and used, the equipment comprising means for fixing the tooling capable of generating the required compression force. The force with which the screw 9 and the rod 10 are connected is generated by means of known translational movement generation mechanisms, e.g., hydraulic or pneumatic cylinders, toothed rack gears or EMA. The press for controlling the force during assembly is equipped with a force sensor (not shown in the drawings) and a linear displacement sensor of the press rod (not shown in the drawings). Instead of the linear displacement sensor of the press rod, a ruler (not shown in the drawings) can be placed on the press, and a pointer (not shown in the drawings) can be placed on the press to visually determine the position of the press rod.

The screw 9 moves translationally towards the rod 10 until the teeth 12 are embedded (cut) into the surface of the axial opening 11. In the embodiments shown in Figs 1-3 and 10, the screw 9 is moved until a certain force acting on the press rod and a certain position of the press rod are achieved. As noted above, the force depends on the shape and number of teeth 12, the presence of annular grooves 18 in the corresponding embodiment, and the force that the EMA generates. In the embodiments shown in Fig. 5, Fig. 6, Fig. 10, the screw 9 moves translationally until the collar 14 limiting the longitudinal movement of the screw 9 during assembly (pressing) with the rod 10, reaches the countersurface of the axial opening 11, which is determined by a sharp change in the magnitude of the force as more force is required to deform the collar 14 than to press the teeth 12 into the surface of the axial opening 11.

In the embodiments shown in Figs 1-3 and 10, during pressing, the protrusions 16 forming part of the retainer 15 move apart in the radial direction due to the contact with the tapered section of the collar 14, and after pressing the screw 9, said protrusions return to their original shape enclosing the screw 9. Then the ring 17 is mounted on the rod 10 by longitudinal movement. To mount the ring 17, a force needs to be created which can be provided by the same press as the press used for mounting the screw 9, but with a different clamp on the press rod. To reduce the force required to mount the ring 17, said ring can be heated so that said ring increases in diameter. The ring 17 presses the protrusions 16 against the screw 9. To reduce the force required to mount the ring 17, the ring 17 can also be mounted without releasing the force on the screw 9 so that the screw 9 does not tend to push apart the protrusions 16 against which the collar 14 rests.

In the embodiment shown in Figs. 4, 5, after the screw 9 is pressed in, glue is applied to the threaded surface of the nut 19, or a toothed washer is mounted between the rod 10 and the nut 19. The nut 19 is screwed into the threaded opening in the rod 10, which is part of the retainer 15, and is tightened with force. The tightening force is determined based on the force that the EMA can generate. The tightening force of the nut 19 is controlled, e.g., using a torque wrench (not shown in the drawings).

In the embodiment shown in Figs. 6-10, after the screw 9 is pressed in, a press-stem 21 is mounted on the press rod. The press-stem 21 is pressed against the annular protrusion 20, which is part of the retainer 15, using a force controlled by a force sensor on the press, thus bending sections of the annular protrusion 20 towards the axis of the screw 9. Depending on the design of the press-stem 21, the required number of bendable sections of the annular protrusion 20 and the thickness of the protrusion 20, the press-stem 21 is repeatedly pressed in, rotating the press-stem 21 or replacing it with a press-stem 21 with a different tapering angle of the protrusions at the end thereof, or the mounting process is completed.

It should be noted that in addition to the listed equipment and tools, robot-assisted systems can be used to speed up the assembly process.

A person skilled in the field of linear electromechanical actuators would appreciate that it is because of the use of inverted RSD the connecting section is provided on the RSD screw and the axial opening is provided in the rod. It should be noted that the RSD screw of the present EMA has teeth arranged thereon, and the rod has opening, because the RSD screw advantageously has increased hardness, and the rod has the core of lesser hardness. If a EMA is implemented with another type of RSD, e.g. where the RSD screw has a long threaded portion defining the stroke of the EMA rod, the RSD cylinder has an inner thread and is configured for translational movement along the RSD screw, and threaded rollers are arranged between the RSD cylinder threads and the RSD screw threads, attachment of the RSD rod to the RSD cylinder preventing their relative longitudinal movement may be provided by arranging the connecting section on the RSD cylinder, and the axial opening - in the rod, with which the RSD cylinder is connected without the possibility of relative longitudinal movement. It is possible to place the connecting section with the teeth on the rod, and the axial opening - in the RSD opening, where the RSD cylinder will have lesser metal hardness in the region of connection with the rod teeth. A retainer may be implemented in the form of a suitable structure, e.g. in the form of a threaded nut.

Further, according to the invention, the connecting section on the RSD screw, axial opening on the rod and the retainer may be used not only in an inverted RSD, where a cylinder with the inner thread rotates and an RSD screw moves, but also in an inverted RSD, where an RSD screw rotates and a shaft connected to the EMA rotor is connected to the RSD screw, and an RSD cylinder with the inner thread moves translationally. In this case the shaft may be connected with the screw in the same manner as the rod is connected with the RSD screw according to the present invention.

## Claims

1. A linear electromechanical actuator, comprising:
a housing (1, 3, 4, 5, 6),
an electric motor (22, 23),
a roller screw drive (7, 8, 9) arranged within the housing, and
an output member, configured for translational movement with respect to the housing, wherein
the electric motor comprises a stator (22) fixed to an inner surface of the housing and a rotor, the rotor being arranged to transmit rotational motion to the roller screw drive,
the roller screw drive comprises
a cylinder (7) with an internal thread, the cylinder (7) is rotatably mounted within the housing,
a screw (9) mounted within the cylinder (7) and having an external thread, and
threaded rollers (8), the rollers (8) are mounted in said cylinder (7) to engage between the internal thread of the cylinder (7) and the external thread of the screw (9) for translational movement within the cylinder (7), and
a rod (10), the rod (10) being connected to the screw (9) to form the output member,
the rod (10) having an axial opening at the end proximal to the screw (9),
the actuator being **characterized in that:**
the screw (9) comprises a connecting section at the end proximal to the rod with a plurality of longitudinal teeth (12) arranged along the perimeter of the connecting section,
the longitudinal teeth (12) of the connecting section are embedded into the surface defined by the axial opening, and
the actuator further comprises
a retainer (15), the retainer (15) is arranged to engage with the rod (10) and the screw (9) so as to prevent longitudinal movement of the rod (10) relative to the screw (9);
wherein the teeth (12) are arranged at an angle to the axis of the screw (9), and the axial opening in the rod defines a tapered section for interacting with the teeth (12) of the screw (9).

2. The linear electromechanical actuator according to claim 1, wherein annular grooves (18) are formed on the tapered section of the axial opening.

3. The linear electromechanical actuator according to claim 1 or 2, wherein the retainer (15) is formed by an axial threaded opening, the threaded opening being made in the rod (10) at the end of the rod (10) proximal to the screw (9), and a nut (19) with an external thread configured to be screwed into the axial threaded opening.

4. The linear electromechanical actuator according to claim 1 or 2, wherein the retainer (15) is formed by sections of the annular protrusion (20), the sections being bent towards the axis of the rod (10) at the end of the rod (10) proximal to the screw (9).

5. The linear electromechanical actuator according to claim 1 or 2, wherein the retainer (15) is formed by at least two protrusions (16), the protrusions (16) being made on the end of the rod (10) proximal to the screw (9) so as to enclose a collar (14) of the screw (9).

6. The linear electromechanical actuator according to claim 1 or 2, wherein the retainer (15) is formed by at least two protrusions (16), the protrusions (16) being made on the end of the rod (10) proximal to the screw (9) so as to enclose the collar (14) on the screw (9), and a ring (17) configured to enclose such protrusions (16).

7. The linear electromechanical actuator according to claim 6, wherein the protrusions (16) have a tapered outer surface, wherein the tapering angle of the surfaces is such that the diameter of the circle in which the protrusions (16) are inscribed increases towards the end of the rod (10) proximal to the screw (9).

8. The linear electromechanical actuator according to claim 6, wherein the protrusions (16) have a tapered outer surface, wherein the tapering angle of the surfaces is such that the diameter of the circle in which the protrusions (16) are inscribed increases towards the end of the rod (10) proximal to the screw (9), and the ring (17) has a tapered opening.

9. The linear electromechanical actuator according to any one of claims 1- 8, wherein the screw (9) has a through axial opening.

10. A method for assembling the output member of a linear electromechanical actuator according to one or more claims 1-9, the method comprising:
positioning the screw (9) and the rod (10) coaxially with respect to each other so that the axial threaded opening of the rod (10) faces the connecting section of the screw (9);
insertion the connecting section of the screw (9) into the rod (10) opening by applying a controlled axial force to embed the teeth (12) into the surface of the axial opening by plastic deformation of the surface,
fixation the rod and the screw from relative longitudinal movement with the retainer.

11. The method for assembling the output member of a linear electromechanical actuator according to claim 10 when it refers back to claim 3, wherein the fixation is performed by:
positioning the nut (19) with the external thread coaxially with respect to the axial threaded opening in the rod (10), and
screwing the nut (19) into the axial threaded opening of the rod (10), and
tightening the nut (19) by applying controlled torque.

12. The method for assembling the output member of a linear electromechanical actuator according to claim 10 when it refers back to claim 4, wherein the fixation is performed by:
bending the sections of the annular protrusion (20) towards the axis of the rod (10) by applying a controlled force until the sections enclose the screw (9).

13. The method for assembling the output member of a linear electromechanical actuator according to claim 10 when it refers back to claim 5, wherein the fixation is performed by:
insertion the screw (9) by applying a controlled force until the protrusions (16) enclose the collar (14) of the screw (9).

14. The method for assembling the output member of a linear electromechanical actuator according to claim 10 when it refers back to claim 6, wherein the fixation is performed by:
insertion the screw (9) by applying a controlled force until the protrusions (16) enclose the collar (14) of the screw (9),
positioning the ring (17) coaxially with respect to the rod (10), and
mounting the ring (17) on the protrusions (16) by applying a controlled axial force.

## Patentansprüche

1. Linearer elektromechanischer Aktor, umfassend:
ein Gehäuse (1, 3, 4, 5, 6),
einen Elektromotor (22, 23),
einen innerhalb des Gehäuses angeordneten Rollengewindetrieb (7, 8, 9), und
ein Abtriebselement, das für eine Translationsbewegung in Bezug auf das Gehäuse konfiguriert ist,
wobei
der Elektromotor einen an einer Innenfläche des Gehäuses befestigten Stator (22) und einen Rotor umfasst, wobei der Rotor so angeordnet ist, dass er eine Drehbewegung auf den Rollengewindetrieb überträgt,
der Rollengewindetrieb umfasst
einen Zylinder (7) mit einem Innengewinde, wobei der Zylinder (7) drehbar in dem Gehäuse gelagert ist,
eine Schraube (9), die innerhalb des Zylinders (7) montiert ist und ein Außengewinde aufweist, und
Gewinderollen (8), wobei die Rollen (8) in dem Zylinder (7) montiert sind, um zwischen dem Innengewinde des Zylinders (7) und dem Außengewinde der Schraube (9) für eine Translationsbewegung innerhalb des Zylinders (7) in Eingriff zu kommen, und
eine Stange (10), wobei die Stange (10) mit der Schraube (9) verbunden ist, um das Abtriebselement zu bilden,
die Stange (10) hat eine axiale Öffnung an dem nahe der Schraube (9) befindlichen Ende,
wobei der Aktor **dadurch gekennzeichnet ist, dass:**
die Schraube (9) an dem nahe der Stange befindlichen Ende einen Verbindungsabschnitt mit einer Vielzahl von Längszähnen (12) aufweist, die entlang des Umfangs des Verbindungsabschnitts angeordnet sind,
die Längszähne (12) des Verbindungsabschnitts in die durch die axiale Öffnung definierte Fläche eingebettet sind, und
der Aktor außerdem
einen Halter (15) umfasst, wobei der Halter (15) so angeordnet ist, dass er mit der Stange (10) und der Schraube (9) in Eingriff kommt, um eine Längsbewegung der Stange (10) relativ zur Schraube (9) zu verhindern;
wobei die Zähne (12) in einem Winkel zur Achse der Schraube (9) angeordnet sind und die axiale Öffnung in der Stange einen sich verjüngenden Abschnitt zum Zusammenwirken mit den Zähnen (12) der Schraube (9) definiert.

2. Linearer elektromechanischer Aktor nach Anspruch 1, **dadurch gekennzeichnet, dass** auf dem sich verjüngenden Abschnitt der axialen Öffnung ringförmige Nuten (18) ausgebildet sind.

3. Linearer elektromechanischer Aktor nach Anspruch 1 oder 2, wobei der Halter (15) durch eine axiale Gewindeöffnung gebildet ist, wobei die Gewindeöffnung in der Stange (10) am Ende der Stange (10) nahe der Schraube (9) ausgebildet ist, und eine Mutter (19) mit einem Außengewinde so konfiguriert ist, dass sie in die axiale Gewindeöffnung geschraubt werden kann.

4. Linearer elektromechanischer Aktor nach Anspruch 1 oder 2, wobei der Halter (15) durch Abschnitte des ringförmigen Vorsprungs (20) gebildet wird, wobei die Abschnitte am Ende der Stange (10), das sich nahe der Schraube (9) befindet, in Richtung der Achse der Stange (10) gebogen sind.

5. Linearer elektromechanischer Aktor nach Anspruch 1 oder 2, wobei der Halter (15) aus mindestens zwei Vorsprüngen (16) gebildet ist, wobei die Vorsprünge (16) am Ende der Stange (10) nahe der Schraube (9) ausgebildet sind, um einen Bund (14) der Schraube (9) zu umschließen.

6. Linearer elektromechanischer Aktor nach Anspruch 1 oder 2, wobei der Halter (15) aus mindestens zwei Vorsprüngen (16) gebildet ist, wobei die Vorsprünge (16) am Ende der Stange (10) nahe der Schraube (9) ausgebildet sind, um den Bund (14) auf der Schraube (9) zu umschließen, und ein Ring (17) so konfiguriert ist, dass er diese Vorsprünge (16) umschließt.

7. Linearer elektromechanischer Aktor nach Anspruch 6, wobei die Vorsprünge (16) eine sich verjüngende Außenfläche aufweisen, wobei der Verjüngungswinkel der Oberflächen derart ist, dass der Durchmesser des Kreises, in den die Vorsprünge (16) eingeschrieben sind, in Richtung des Endes der Stange (10) nahe der Schraube (9) zunimmt.

8. Linearer elektromechanischer Aktor nach Anspruch 6, wobei die Vorsprünge (16) eine sich verjüngende Außenfläche aufweisen, wobei der Verjüngungswinkel der Oberflächen derart ist, dass der Durchmesser des Kreises, in den die Vorsprünge (16) eingeschrieben sind, in Richtung des Endes der Stange (10) nahe der Schraube (9) zunimmt, und der Ring (17) eine sich verjüngende Öffnung aufweist.

9. Linearer elektromechanischer Aktor nach einem der Ansprüche 1 bis 8, wobei die Schraube (9) eine durchgehende axiale Öffnung aufweist.

10. Verfahren zum Zusammenbau des Abtriebselements eines linearen elektromechanischen Aktors nach einem oder mehreren der Ansprüche 1 bis 9, wobei das Verfahren umfasst:
Positionieren der Schraube (9) und der Stange (10) koaxial zueinander, so dass die axiale Gewindeöffnung der Stange (10) dem Verbindungsabschnitt der Schraube (9) gegenüberliegt;
Einsetzen des Verbindungsabschnitts der Schraube (9) in die Öffnung der Stange (10) durch Aufbringen einer kontrollierten axialen Kraft, um die Zähne (12) in die Oberfläche der axialen Öffnung durch plastische Verformung der Oberfläche einzubetten,
Befestigen der Stange und der Schraube vor relativer Längsbewegung mit dem Halter.

11. Verfahren zum Zusammenbau des Abtriebselements eines linearen elektromechanischen Aktors nach Anspruch 10, wenn dieser auf Anspruch 3 verweist, wobei die Befestigung erfolgt durch:
Positionieren der Mutter (19) mit dem Außengewinde koaxial zu der axialen Gewindeöffnung in der Stange (10), und
Einschrauben der Mutter (19) in die axiale Gewindeöffnung der Stange (10) und Anziehen der Mutter (19) durch Aufbringen eines kontrollierten Drehmoments.

12. Verfahren zum Zusammenbau des Abtriebselements eines linearen elektromechanischen Aktors nach Anspruch 10, wenn dieser auf Anspruch 4 verweist, wobei die Befestigung erfolgt durch:
Biegen der Abschnitte des ringförmigen Vorsprungs (20) in Richtung der Achse der Stange (10) durch Aufbringen einer kontrollierten Kraft, bis die Abschnitte die Schraube (9) umschließen.

13. Verfahren zum Zusammenbau des Abtriebselements eines linearen elektromechanischen Aktors nach Anspruch 10, wenn dieser auf Anspruch 5 verweist, wobei die Befestigung erfolgt durch:
Einsetzen der Schraube (9) durch Aufbringen einer kontrollierten Kraft, bis die Vorsprünge (16) den Bund (14) der Schraube (9) umschließen.

14. Verfahren zum Zusammenbau des Abtriebselements eines linearen elektromechanischen Aktors nach Anspruch 10, wenn dieser auf Anspruch 6 verweist, wobei die Befestigung erfolgt durch:
Einsetzen der Schraube (9) durch Aufbringen einer kontrollierten Kraft, bis die Vorsprünge (16) den Bund (14) der Schraube (9) umschließen,
Positionieren des Rings (17) koaxial zur Stange (10), und
Montieren des Rings (17) auf den Vorsprüngen (16) durch Aufbringen einer kontrollierten axialen Kraft.

## Revendications

1. Actionneur électromécanique linéaire, comprenant :
un boîtier (1, 3, 4, 5, 6),
un moteur électrique (22, 23),
un entraînement par vis à roulement (7, 8, 9) disposé à l'intérieur du boîtier, et
un élément de sortie, configuré pour un mouvement de translation par rapport au boîtier, dans lequel le moteur électrique comprend un stator (22) fixé à une surface intérieure du boîtier et un rotor, le rotor étant conçu pour transmettre un mouvement de rotation à l'entraînement par vis à roulement, l'entraînement par vis à roulement comprend
un cylindre (7) avec un filetage interne, le cylindre (7) étant monté rotatif à l'intérieur du boîtier,
une vis (9) montée à l'intérieur du cylindre (7) et ayant un filetage externe, et des rouleaux filetés (8), les rouleaux (8) étant montés dans ledit cylindre (7) pour s'engager entre le filetage interne du cylindre (7) et le filetage externe de la vis (9) pour un mouvement de translation à l'intérieur du cylindre (7), et
une tige (10), la tige (10) étant reliée à la vis (9) pour former l'élément de sortie,
la tige (10) ayant une ouverture axiale à l'extrémité proximale de la vis (9),
l'actionneur étant **caractérisé en ce que :**
la vis (9) comprend une section de connexion à l'extrémité proximale de la tige avec une pluralité de dents longitudinales (12) disposées le long du périmètre de la section de connexion,
les dents longitudinales (12) de la section de connexion sont encastrées dans la surface définie par l'ouverture axiale, et
l'actionneur comprend en outre
un dispositif de retenue (15), le dispositif de retenue (15) étant conçu pour s'engager avec la tige (10) et la vis (9) de manière à empêcher tout mouvement longitudinal de la tige (10) par rapport à la vis (9) ;
dans lequel les dents (12) sont disposées à un angle par rapport à l'axe de la vis (9), et l'ouverture axiale de la tige définit une section conique pour interagir avec les dents (12) de la vis (9).

2. Actionneur électromécanique linéaire selon la revendication 1, dans lequel des rainures annulaires (18) sont formées sur la section conique de l'ouverture axiale.

3. Actionneur électromécanique linéaire selon la revendication 1 ou 2, dans lequel le dispositif de retenue (15) est formé par une ouverture filetée axiale, l'ouverture filetée étant pratiquée dans la tige (10) à l'extrémité de la tige (10) proximale de la vis (9), et un écrou (19) avec un filetage externe configuré pour être vissé dans l'ouverture filetée axiale.

4. Actionneur électromécanique linéaire selon la revendication 1 ou 2, dans lequel le dispositif de retenue (15) est formé par des sections de la saillie annulaire (20), les sections étant pliées vers l'axe de la tige (10) à l'extrémité de la tige (10) proximale de la vis (9).

5. Actionneur électromécanique linéaire selon la revendication 1 ou 2, dans lequel le dispositif de retenue (15) est formé par au moins deux saillies (16), les saillies (16) étant réalisées sur l'extrémité de la tige (10) proximale de la vis (9) de manière à entourer un collier (14) de la vis (9).

6. Actionneur électromécanique linéaire selon la revendication 1 ou 2, dans lequel le dispositif de retenue (15) est formé par au moins deux saillies (16), les saillies (16) étant réalisées sur l'extrémité de la tige (10) proximale de la vis (9) de manière à entourer le collier (14) sur la vis (9), et un anneau (17) configuré pour entourer ces saillies (16).

7. Actionneur électromécanique linéaire selon la revendication 6, dans lequel les saillies (16) ont une surface extérieure conique, dans lequel l'angle de conicité des surfaces étant tel que le diamètre du cercle dans lequel les saillies (16) sont inscrites augmente vers l'extrémité de la tige (10) proximale de la vis (9).

8. Actionneur électromécanique linéaire selon la revendication 6, dans lequel les saillies (16) ont une surface extérieure conique, dans lequel l'angle de conicité des surfaces est tel que le diamètre du cercle dans lequel les saillies (16) sont inscrites augmente vers l'extrémité de la tige (10) proximale de la vis (9), et l'anneau (17) a une ouverture conique.

9. Actionneur électromécanique linéaire selon l'une quelconque des revendications 1 à 8, dans lequel la vis (9) a une ouverture axiale traversante.

10. Procédé d'assemblage de l'élément de sortie d'un actionneur électromécanique linéaire selon l'une ou plusieurs des revendications 1 à 9, le procédé comprenant :
le positionnement de la vis (9) et de la tige (10) coaxialement l'une par rapport à l'autre de sorte que l'ouverture filetée axiale de la tige (10) soit en face de la section de connexion de la vis (9) ;
l'insertion de la section de connexion de la vis (9) dans l'ouverture de la tige (10) en appliquant une force axiale contrôlée pour encastrer les dents (12) dans la surface de l'ouverture axiale par déformation plastique de la surface,
la fixation de la tige et de la vis du mouvement longitudinal relatif avec le dispositif de retenue.

11. Procédé d'assemblage de l'élément de sortie d'un actionneur électromécanique linéaire selon la revendication 10 lorsqu'elle renvoie à la revendication 3, dans lequel la fixation est réalisée par :
le positionnement de l'écrou (19) avec le filetage externe coaxialement par rapport à l'ouverture filetée axiale de la tige (10), et
le vissage de l'écrou (19) dans l'ouverture filetée axiale de la tige (10) et le serrage de l'écrou (19) en appliquant un couple contrôlé.

12. Procédé d'assemblage de l'élément de sortie d'un actionneur électromécanique linéaire selon la revendication 10 lorsqu'elle renvoie à la revendication 4, dans lequel la fixation est réalisée par : le pliage des sections de la saillie annulaire (20) vers l'axe de la tige (10) en appliquant une force contrôlée jusqu'à ce que les sections entourent la vis (9).

13. Procédé d'assemblage de l'élément de sortie d'un actionneur électromécanique linéaire selon la revendication 10 lorsqu'elle renvoie à la revendication 5, dans lequel la fixation est réalisée par : l'insertion de la vis (9) en appliquant une force contrôlée jusqu'à ce que les saillies (16) entourent le collier (14) de la vis (9).

14. Procédé d'assemblage de l'élément de sortie d'un actionneur électromécanique linéaire selon la revendication 10 lorsqu'elle renvoie à la revendication 6, dans lequel la fixation est réalisée par :
l'insertion de la vis (9) en appliquant une force contrôlée jusqu'à ce que les saillies (16) entourent le collier (14) de la vis (9),
le positionnement de l'anneau (17) coaxialement par rapport à la tige (10), et
le montage de l'anneau (17) sur les saillies (16) en appliquant une force axiale contrôlée.
